# EUROPÄISCHE PATENTANMELDUNG

(11) **EP 3 363 333 A1**
(43) Veröffentlichungstag der Anmeldung: **22.08.2018**
(21) Anmeldenummer: 17156592.2
(22) Anmeldetag: 17.02.2017
(51) Int. Cl.: A47G 1/04, A47B 67/00, A47G 1/00

(54) **SPIEGELVORRICHTUNG ZUR BETRACHTUNG EINER PERSON IN EINEM SPIEGEL, VERFAHREN ZUR HERSTELLUNG EINER SPIEGELVORRICHTUNG UND VERFAHREN ZUM BETRACHTEN EINER PERSON IN EINER SPIEGELVORRICHTUNG**

(71) Anmelder: Gerig Design AG, 9000 St. Gallen (CH)
(72) Erfinder: Gerig, Thomas, 9515 Hosenruck (CH)
(74) Vertreter: Hepp Wenger Ryffel AG

(57) **Zusammenfassung**

Eine Spiegelvorrichtung (1) zur Betrachtung einer Person (2) in einem Spiegel umfasst eine Lichtquelle (3), eine Abschirmung (4) zur Abschirmung von direktem Licht zwischen Person (2) und Lichtquelle (3), einen Reflektor (5) zur Reflexion des durch die Lichtquelle (3) erzeugten Lichtes und mindestens einen Betrachtungsbereich (6) in dem sich die Person (2) betrachten kann, wobei die Abschirmung (4) derartig zwischen Person und Lichtquelle angeordnet ist, dass kein direktes Licht zur Person (2) gelangt. Der Reflektor (5) ist entweder im Wesentlichen in einer Ebene mit dem Betrachtungsbereich (6) angeordnet und bildet so einen Flügel und/oder der Betrachtungsbereich (6) ist Teil der Abschirmung (4), so dass der Reflektor (5) beim Betrachten des Betrachtungsbereiches (6) durch die Person (2) jeweils seitlich anordenbar ist. Der Reflektor (5) weist eine Diffusoroberfläche (8) auf, die die eintreffende Strahlung der Lichtquelle (3) streut.

## Beschreibung

Die Erfindung richtet sich auf eine Spiegelvorrichtung zur Betrachtung einer Person in einem Spiegel, ein Verfahren zur Herstellung einer Spiegelvorrichtung sowie ein Verfahren zum Betrachten einer Person in einer Spiegelvorrichtung gemäss dem Oberbegriff der unabhängigen Ansprüche.

Aus dem Stand der Technik sind Spiegelvorrichtungen bekannt, die bereits Beleuchtungsvorrichtungen aufweisen. Derartige Beleuchtungsvorrichtungen dienen vor allem dem Ausleuchten der Person vor dem Spiegel oder zusätzlich zur Ausleuchtung des Raumes. Problematisch bei all diesen Spiegelvorrichtungen mit Beleuchtung sind einerseits die Blendung durch direktes Licht und andererseits der Lichtverlust durch eventuelle Abdeckungen.

So ist beispielsweise in der US 1,868,104 eine Spiegelvorrichtung offenbart, die drei Spiegelflächen umfasst, wobei hinter den äusseren Spiegelflächen jeweils Leuchtmittel angebracht sind. Das Licht wird über fokussierende Reflektoren direkt auf den Benutzer gelenkt. Dadurch wird ein Benutzer geblendet und die Person vor dem Spiegel wird nicht optimal ausgeleuchtet.

Auch aus der JP2006-340877 ist eine beleuchtete Spiegelschrankvorrichtung bekannt, bei der eine mittlere Spiegelplatte aus einem Schrank hervorgezogen wird und der Lichtquellen hinter dieser hervorziehbaren Platte befinden. Das Licht wird über Spiegel seitlich der mittleren Spiegelvorrichtung direkt in die Augen des Betrachters gelenkt, so dass dieser geblendet wird, sobald er in Richtung des mittleren Spiegels blickt. Weiterhin ist der Aus der DE 102005026594 ist eine Beleuchtungseinrichtung für Spiegel bekannt, die hinter der Spiegelfläche angebracht ist, wobei ein runder Reflektor um die Lichtquelle herum angeordnet ist, der das Licht direkt auf die Spiegelfläche lenkt. Der Reflektor hat fokussierende Eigenschaften und führt somit zu harten Schatten.

Es ist daher Aufgabe der vorliegenden Erfindung die Nachteile des Standes der Technik zu vermeiden und ein Spiegelvorrichtung, ein Verfahren zur Herstellung einer Spiegelvorrichtung sowie ein Verfahren zum Betrachten einer Person in eine Spiegelvorrichtung zu schaffen, die eine optimale Ausleuchtung der Person sowie eine einfache Konstruktion der Spiegelvorrichtung wie auch ein elegantes Erscheinungsbild zu schaffen.

Die Aufgabe wird durch eine Spiegelvorrichtung zur Betrachtung einer Person in einem Spiegel gelöst, die eine Lichtquelle, eine Abschirmung zur Abschirmung von direktem Licht zwischen Person und Lichtquelle, einen Reflektor zur Reflektion des durch die Lichtquelle erzeugten Lichtes und mindestens ein Betrachtungsbereich aufweist, in dem sich die Person betrachten kann. Die Abschirmung ist derartig angeordnet, dass im Wesentlichen kein direktes Licht von der Lichtquelle zur Person gelangt. Der Reflektor ist entweder im Wesentlichen in einer Ebene mit dem Betrachtungsbereich angeordnet und bildet so einen Flügel und/oder der Betrachtungsbereich ist Teil der Abschirmung, so dass der Reflektor beim Betrachten des Betrachtungsbereiches durch die Person jeweils seitlich anordenbar ist. Der Reflektor weist eine Diffusoroberfläche auf, die die eintreffende Strahlung der Lichtquelle streut.

Eine derartige Spiegelvorrichtung führt zu einer optimalen Ausleuchtung der Person vor der Spiegelvorrichtung ohne Schattenwürfe.

Der Reflektor mit seiner Diffusoroberfläche führt zu einer diffusen und homogenen Reflektion des Lichtes im Wesentlichen ohne Lichtverluste. Hierbei kann die Diffusoroberfläche bewusst strukturiert und/oder mattiert und/oder geätzt sein. Eine Ätzung kann mit Schaum oder liquidem Ätzmittel erzielt werden. Die der Diffusoroberfläche gegenüberliegende Oberfläche weist reflektierende Eigenschaften auf, insbesondere eine spiegelnde Oberfläche, bevorzugt eine Silberoberfläche.

Ein Reflektor in einer Ebene mit einem Betrachtungsbereich bedeute im Rahmen der Erfindung, dass Reflektor und Betrachtungsbereich entweder aus einem Glas bestehen, wobei die Oberflächenbehandlung unterschiedlich ist oder dass ein Betrachtungsbereich auf dem Reflektor aufgebracht, beispielsweise aufgeklebt ist. Der Betrachtungsbereich kann dabei jegliche Form annehmen, beispielsweise rund, dreieckig, viereckig oder mehreckig oder oval. Der Betrachtungsbereich kann neben oder im Reflektor angeordnet sein.

Die Diffusoroberfläche kann Kavitäten, insbesondere konkave Strukturen, aufweisen, die bevorzugt und uneinheitlich, insbesondere bevorzugt zufällig verteilt ausgebildet sind.

Derartige konkave Strukturen führen zu einer optimalen Diffusion und Homogenisierung des Lichtes und somit zu wenig Lichtverlust und wenig Schattenwürfen im Auge des Betrachters.

Die konkaven Strukturen müssen hierbei nicht unbedingt optimale Rundungen aufweisen, sondern können auch in der Rundung Unebenheiten aufweisen, wie sie beispielsweise durch Ätzen mit liquidem Ätzmittel entstehen. Im Rahmen der Anmeldung uneinheitlich heisst dass die konkaven Strukturen unterschiedlich tief und unterschiedlich gross ausgebildet sind. Bevorzugt weisen die konkaven Strukturen Kanten zwischeneinander auf, die durch Ecken begrenzt sind. Insbesondere können mehr als sechs, bevorzugt sieben Ecken pro Kavität ausgebildet sein. Die konkaven Strukturen werden bevorzugt in ein Glas geätzt, insbesondere durch einen Ätzschaum auf die Oberfläche des Glases aufgebracht. Somit entsteht eine Milchglasoberfläche mit konkaven Strukturen die für eine optimale Diffusion des Lichtes besorgt. Die Kavitäten haben bevorzugt maximale Ausdehnungen von im Wesentlichen 200 µm, wobei die minimale Ausdehnung bei 10 µm, insbesondere 20 µm weiter insbesondere 40 µm liegt. Die Tiefe der Kavitäten liegt bevorzugt im Bereich von 5 - 30 µm, bevorzugt 3-10 µm.

Der Reflektor kann nach Plan ausgebildet sein und bevorzugt eine Reflektionsschicht aufweisen, die insbesondere ein Abstand zur Diffusor-Oberfläche aufweist, der kleiner als 1cm, insbesondere kleiner als 0.8cm ist.

Ein plan ausgebildete Reflektor verhindert Fokussierung des Lichtes und somit ein Blenden der Person vor der Spiegelvorrichtung. Eine Reflektionsschicht des Reflektors führt zu weniger Lichtverlust und somit eine helleren Reflektion. Ein kleinerer Abstand als 1cm zwischen Reflektionsschicht und Diffusoroberfläche führt zu einem stabilen und dennoch leichten und leicht montierbaren Reflektor. Der Reflektor umfasst vorzugsweise ein Weissglas um keinerlei farbliche Veränderungen des erzeugten Lichtes im Reflektor zu erzeugen. Bei erwünschter farbiger Anpassung ist selbstverständlich auch ein farbiges Glas denkbar. Die Reflektionsschicht ist bevorzugt eine Silberschicht, die insbesondere zusätzlich mit einer Schutzschicht auf der Rückseite versehen ist. Der Aufbau des Reflektors kann daher eine Schutzschicht, eine Reflektionsschicht und eine Glasschicht umfassen, wobei die Glasschicht eine Diffusoroberfläche umfasst. Anstatt der Schutzschicht kann eine weitere Glasschicht ausgebildet sein, so dass die Reflektionsschicht von beiden Seiten hier sichtbar ist und so der Reflektor beidseitig reflektiert. Alternativ kann auf die Schutzschicht eine zweite Reflektionsschicht und eine weitere Glasschicht aufgebracht werden, so dass ebenfalls die Rückseite als Spiegel verwendbar ist.

Die Längenausdehnung des Reflektors L_{R} kann grösser sein als ein Viertel des Abstandes des Reflektors von der Lichtquelle, bevorzugt grösser als die Hälfte des Abstandes des Reflektors von der Lichtquelle, bevorzugt im Wesentlichen der Hälfte des Abstandes des Reflektors von der Lichtquelle entsprechen. Ein Abstand von der Lichtquelle zum Reflektor kann grösser sein als die Längenausdehnung des Reflektors, bevorzugt länger als das doppelte der Längenausdehnung L_{R}.

Somit entsteht genug Reflektorfläche um eine ausreichende Diffusorlichtverteilung zu erreichen. Die Ausdehnung des Reflektors verläuft hierbei entlang einer Achse die senkrecht zur Höhlenausdehnung der Spiegelvorrichtung im gebrauchsfertigen Zustand entspricht.

Der Abstand des Reflektors von der Lichtquelle kann mindestens 20cm, bevorzugt mindestens 40 cm, betragen.

Ein derartiger Abstand führt zu der Möglichkeit einer indirekten, seitlichen Beleuchtung einer Person ohne Blendung.

Der Reflektor, insbesondere der Flügel, kann beweglich, bevorzugt um eine Hochachse drehbar, mit einer Rückwand oder einem Korpus der Spiegelvorrichtung verbunden sein.

Somit kann der Benutzer die Position des Reflektors selber bestimmen und somit eine optimale Ausleuchtung für sich erzielen.

An der Rückwand und/oder am Korpus können eine oder mehrere Beleuchtungseinrichtung derart angeordnet sein, dass der Raum indirekt beleuchtbar ist und bevorzugt im Wesentlichen kein direktes Licht auf eine Person vor der Spiegelvorrichtung in einem montierten Zustand gelangt, wobei insbesondere die eine oder mehrere Beleuchtungseinrichtungen in einer Nut versenkt angeordnet sind.

Somit wird auch bei Beleuchtung des Raumes ein angenehmes indirektes Licht erzeugt.

Lichtquelle und Beleuchtungseinrichtung können jegliche Art von Lichtquellen sein so beispielsweise Glühbirnen, Leuchtstoffröhren, Halogenleuchten, LEDs, OLEDS oder andere Lichtquellen. Weiterhin können die Beleuchtungseinrichtungen auch farblich einstellbar sein oder/und unterschiedliche Farben aufweisen. Dies gilt auch für die Lichtquellen. Somit können unterschiedliche Stimmungen erzeugt werden, was insbesondere bei den Beleuchtungseinrichtungen von Bedeutung ist.

Durch ein Bewegen des Reflektors, insbesondere des Flügels, kann ein Schalter derart betätigbar sein, dass bei Öffnen des Spiegelvorrichtung die Lichtquelle einschaltet, bevorzugt mit einer Dimmschaltung, und/oder beim Schliessen der Spiegelvorrichtung die Lichtquelle ausschaltet, bevorzugt mit einer Dimmschaltung. Somit wird die Beleuchtung ausschliesslich verwendet, wenn der Reflektor bewegt und somit die Spiegelvorrichtung geöffnet wurde. Dies führt zu einer energiesparendenden Verwendung der Lichtquelle.

Der Schalter kann hierbei jegliche bekannte Art von Schalter sein, wie beispielsweise mechanische Schalter, Magnetschalter, Induktivschalter oder Bewegungsmelder. Weiterhin wäre auch ein optischer Schalter denkbar. Eine Dimmschaltung sorgt für ein langsames Einschalten der Lichtquelle und somit für ein angenehmeres Einschalten, da keine plötzlichen Helligkeitsveränderungen auf die Augen einwirken, die zu einer unmittelbaren Reaktion der Pupille führen.

Eine Rückseite des Reflektors, bevorzugtes Flügels, kann zumindest teilweise durch einen Spiegel gebildet sein.

Somit kann die Spiegelvorrichtung auch als Spiegel verwendet werden, wenn der Reflektor nicht verwendet wird sondern ausschliesslich das Raumlichts zur Beleuchtung dient.

Die Rückseite des Reflektors bzw. des Flügels ist im Rahmen dieser Erfindung, die Seite, die im geschlossenen Zustand der Spiegelvorrichtung im Raum sichtbar ist. Somit ist die Vorderseite der Reflektor bzw. der Flügel und die Rückseite ein Spiegel.

Es können zwei Lichtquellen, bevorzugt hinter einer gemeinsamen Abschirmung, die insbesondere bevorzugt ein Betrachtungsbereich ist, zwei Reflektoren und bevorzugt zwei Rückseitenbetrachtungsbereiche, jeweils in einer Ebene mit einem Reflektor, ausgebildet sein.

Somit können die jeweiligen Personen vor der Spiegelvorrichtung gleichmässig von beiden Seiten beleuchtet werden und sich gleichzeitig in Betrachtungsbereich sehen. Dies führt zu natürlichen Spiegelbildern ohne harte Schatten auf irgendeiner Seite.

Der Reflektor oder der Betrachtungsbereich können einen Vergrösserungsspiegel umfassen.

Somit kann die Person gleichzeitig ein vergrössertes Spiegelbild ansehen. Der Vergrösserungsspiegel kann hierbei auf den Reflektor oder den Betrachtungsbereich aufgebracht, wie beispielsweise aufgeklebt sein, oder in dasselbe Glas wie der Reflektor oder der Betrachtungsbereich eingebracht worden sein.

Die Spiegelvorrichtung kann eine Korpus umfassen, der zumindest eine Seitenwand aufweist, an der ein Reflektor angeordnet oder befestigt ist und eine der Seitenwand gegenüberliegende Leuchtenwand aufweisen, in der die Lichtquelle angeordnet ist, bevorzugt in eine Nut angeordnet ist. Der Reflektor kann fix an der Seitenwand angebracht sein.

Der Reflektor ist hierbei bevorzugt über eine Drehachse an der Seitenwand befestigt und ist somit einstellbar bezüglich des Winkels zur Seitenwand. Durch eine Nut für die Lichtquelle in der Leuchtenwand, wird bereits ein direktes Anleuchten einer Person vor der Spiegelvorrichtung durch die Nut verhindert. Weiterhin ist es möglich, dass die Lichtquelle in der Nut durch einen lichtdurchlässigen Diffusor bereits gestreut wird, wobei hierbei bevorzugt ein Diffusor verwendet wird, der zu möglichst wenig Helligkeitsverlust führt. Der Korpus ist hierbei derartig ausgebildet, dass die Spiegelvorrichtung gleichzeitig als Schrank dient und Gegenstände in den Korpus beispielsweise auf Tablaren, die zwischen Seitenwand und Leuchtenwand angeordnet sind, abgelegt werden können.

Es können zwei oder mehr Seitenwände und zwei oder mehr Leuchtendwände ausgebildet sein, wobei die Anzahl der Seitenwände der Anzahl der Leuchtenwände entspricht.

Somit können mehrere Personen dieselbe Spiegelvorrichtung verwenden.

Bevorzugt entspricht somit auch die Anzahl der Seitenwände der Anzahl der Reflektoren oder Flügel, so dass eine optimale Ausleuchtung möglich wird.

Die Spiegelvorrichtung kann ein Spiegelschrank für ein Badezimmer sein. Alternativ kann die Spiegelvorrichtung ein Spiegel in einer Umkleidekabine oder einem Kleiderschrank sein.

Zur Lösung der Aufgabe führt weiterhin ein Verfahren zur Herstellung einer Spiegelvorrichtung wie vorhergehend beschrieben umfassend der Schritte:
- Anordnen einer Lichtquelle hinter einer Abschirmung
- Anordnen einer Reflektor in einem Abstand A zu der Lichtquelle, wobei der Abstand A grösser ist als die Längenausdehnung L_{R} des Reflektors und derartig das Licht von der Lichtquelle auf den Reflektor trifft
- Anordnen eines Betrachtungsbereiches für eine Person in einer Ebene mit dem Reflektor oder als Abschirmung für die Lichtquelle, wobei der Reflektor eine Diffusoroberfläche aufweist, die die eintreffende Strahlung der Lichtquelle streut.

Ein derartiges Verfahren führt zu der Herstellung einer Spiegelvorrichtung die eine optimale Ausleuchtung des vor dem Spiegel befindlichen Objekt wie beispielsweise einer Person führt.

Der Abstand A ist bevorzugt grösser als 20cm insbesondere grösser als 40cm insbesondere bevorzugt im Wesentlichen 40cm.

Zur Lösung der Aufgabe führt weiterhin ein Verfahren zum Betrachten einer Person in einer Spiegelvorrichtung wie vorhergehend beschrieben umfassend die Schritte:
- Erzeugen von Licht durch eine Lichtquelle
- Reflektieren des Lichtes durch einem Reflektor von der Lichtquelle auf eine Person, wobei der Reflektor das Licht reflektiert und streut, insbesondere durch Lichtbrechung an eine Diffusoroberfläche.

Mit einem derartigen Verfahren wird die Person vor dem Spiegel optimal ausgeleuchtet und es entstehen keine harten Schatten im Gesicht der Person.

Gemäss einem weiteren Aspekt der Verwendung wird ein Reflektor mit Diffusoroberfläche wie vorhergehend beschrieben zur Ausleuchtung von Personen vor einem Spiegel oder zum Fotografieren von Personen verwendet.

So entsteht ein optimales Licht welches keine harten Schatten auf der Person vor dem Spiegel oder zum Fotografieren hinterlässt.

Ein weiterer Aspekt der Erfindung betrifft die Verwendung eines Reflektors mit Diffusoroberfläche wie vorhergehend beschrieben zur Ausleuchtung von Arbeitsplätzen, insbesondere medizinischen Arbeitsplätzen oder Laborarbeitsplätzen.

Durch das entstehende helle, verlustfreie und schattenfreie Licht kann bei Arbeitsplätzen mit erhöhter Anforderung an optische Gegebenheiten leicht verarbeitet werden und sämtliche Details können ohne Schatten erkannt werden. Insbesondere kann dies auch bei Mikrodosierwaagen für den pharmazeutischen Bereich angewendet werden.

Ein weiterer alternativer Aspekt der Erfindung betrifft die Verwendung eines Reflektors mit Diffusoroberfläche wie vorhergehend beschrieben als Tablar oder Gepäckablage, wobei das Gepäck oder die Gegenstände auf der Rückseite des Reflektors angeordnet sind und die Diffusoroberfläche im Gebrauchszustand im Wesentlichen nach unten ausgerichtet ist.

Somit könnte die Diffusoroberfläche beleuchtet werden und der darunter befindliche Sitzbereich oder Arbeitsbereich perfekt ausgeleuchtet werden.

Ein weiterer Aspekt der Erfindung betrifft eine Beleuchtungseinrichtung für einen Laborarbeitsplatz, insbesondere zur Beleuchtung einer Mikrodosierwaage oder Pharmawaage umfassend eine Lichtquelle, ein Reflektor mit Diffusoroberfläche und eine Beleuchtungsoberfläche, wobei die Lichtquelle Licht auf den Reflektor strahlt und das Licht vom Reflektor auf die Beleuchtungsoberfläche geleitet wird.

Eine derartige Beleuchtungseinrichtung sorgt für eine optimale Schattenfreie Ausleuchtung.

Die Diffusoroberfläche kann Kavitäten, insbesondere konkave Strukturen aufweisen, die bevorzugt und einheitlich, insbesondere bevorzugt zufällig verteilt ausgebildet sind.

Eine derartige Diffusoroberfläche führt zu einer weichen, hellen und schattenfreien Ausleuchtung.

Nachfolgend wird die Erfindung anhand von Figuren näher erleuchtet hierbei zeigt:
- Figur 1: Eine erste Ausführungsform der Spiegelvorrichtung;
- Figur 2: Eine zweite Ausführungsform der Spiegelvorrichtung;
- Figur 3: Eine alternative Ausführungsform der Spiegelvorrichtung gemäss Figur 2;
- Figur 4: Eine alternative Ausführungsform der Spiegelvorrichtung gemäss Figur 1;
- Figur 5: Eine weitere Ausführungsform der Spiegelvorrichtung gemäss Figur 4 für zwei Personen;
- Figur 6: Ein Spiegelschrankmodul gemäss der Erfindung mit einer Reflektorscheibe;
- Figur 7: Ein Spiegelschrank gemäss der Erfindung mit einem Reflektor und einer Betrachtungsfläche;
- Figur 8: Eine weitere Ausführungsform der Spiegelvorrichtung aus Figur 6;
- Figur 9: Eine weitere Ausführungsform der Spiegelvorrichtung aus Figur 7;
- Figur 10: Eine alternative Ausführungsform der Spiegelvorrichtung aus Figur 8;
- Figur 11: Eine weitere alternative Ausführungsform der Spiegelvorrichtung aus Figur 9;
- Figur 12: Eine mikroskopische Aufnahme einer Diffusoroberfläche;
- Figur 13: Eine zweite mikroskopische Aufnahme einer Diffusoroberfläche;
- Figur 14: Eine dritte mikroskopische Aufnahme einer Diffusoroberfläche.

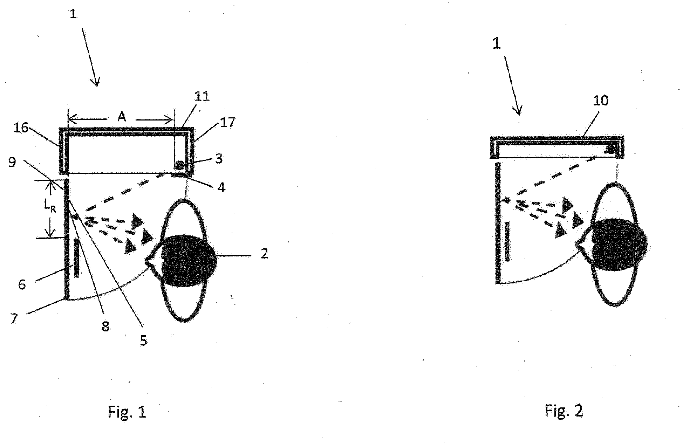

Figur 1 zeigt eine schematische Darstellung einer Spiegelvorrichtung 1 in Form eines Spiegelschrankes. Die Spiegelvorrichtung umfasst eine Leuchtquelle 3, eine Abschirmung 4 sowie einen Reflektor 5. Die Lichtquelle 3 ist hierbei bevorzugt in einer Nut in der Leuchtenwand 17 angeordnet. Weiterhin ist die Lichtquelle 3 in der Nut durch eine Diffusorscheibe abgedeckt. Für den Fall, dass die Lichtquelle 3 in einer Nut angeordnet ist, bildet die Seitenwand der Nut die Abschirmung 4. Andernfalls ist eine zusätzliche Abschirmung 4 ausgebildet. Die Lichtquelle 3 strahlt somit Licht auf den Reflektor 5 der wiederum das Licht auf die Person 2 reflektiert. Die Abschirmung 4 ist zwischen Lichtquelle 3 und Person 2 angeordnet, so dass kein direktes Licht von der Lichtquelle 3 zu Person 2 gelangen kann. Die Lichtquelle 3 ist bevorzugt eine LED. Der Reflektor 5 weist eine Diffusoroberfläche 8 auf, die das Licht von der Lichtquelle 3 streut. Hierzu weist die Diffusoroberfläche 8 Kavitäten, insbesondere konkaven Kavitäten, auf, die unterschiedlich gross und unterschiedlich tief ausgebildet sind, so dass das Licht zufällig gestreut wird. Der Reflektor 5 weist gegenüberliegend von der Diffusoroberfläche 8 eine Reflektionsschicht 9 auf, die bevorzugt aus einer Silberschicht besteht. Ein derartiger Reflektor weist wenig Lichtverlust auf, und führt zu einem weichen, schattenfreien Licht. Die Spiegelvorrichtung 1 umfasst weiterhin einen Korpus 11, der als Schrank zur Aufnahme von Gegenständen ausgebildet ist. Hierzu kann der Korpus 11 Tablare umfassen. Der Korpus 11 umfasst die Seitenwand 16 und die Leuchtenwand 17 sowie eine Rückwand. An der Seitenwand 16 ist der Reflektor 5 über ein Drehscharnier befestigt. Somit kann der Reflektor 5 auf- und zugeklappt werden. Der Reflektor 5 bildet zusammen mit dem Betrachtungsbereich 6 den Flügel 7. Der Betrachtungsbereich 6 ist der Bereich, in dem die Person 2 sich im Spiegel betrachten kann. Der Betrachtungsbereich kann auf den Reflektor aufgeklebt oder Teil des Reflektors 5 sein, wobei der Bereich zum Betrachten keine Diffusoroberfläche 8 umfasst. Die Spiegelvorrichtung 1 ist in einer geöffneten Position gezeigt. Der Abstand A zwischen Lichtquelle 3 und Reflektor 5 ist grösser als die Längenausdehnung L_{R} des Reflektors 5. Die Details dieser Spiegelvorrichtung sind in den folgenden Figuren ebenfalls dargestellt, so dass diese nachfolgend nicht nochmalig beschrieben werden.

Figur 2 entspricht Figur 1 mit dem Unterschied, dass kein Korpus 11 vorhanden ist sondern eine Rückwand 10. Der Rückwand 10 kann ein Spiegel sein, so dass mehrere Betrachtungsbereiche vorhanden sind. Eine derartige Spiegelvorrichtung 1 kann beispielsweise in Umkleidekabinen oder als Ganzkörperspiegel in privaten Haushalten verwendet werden.

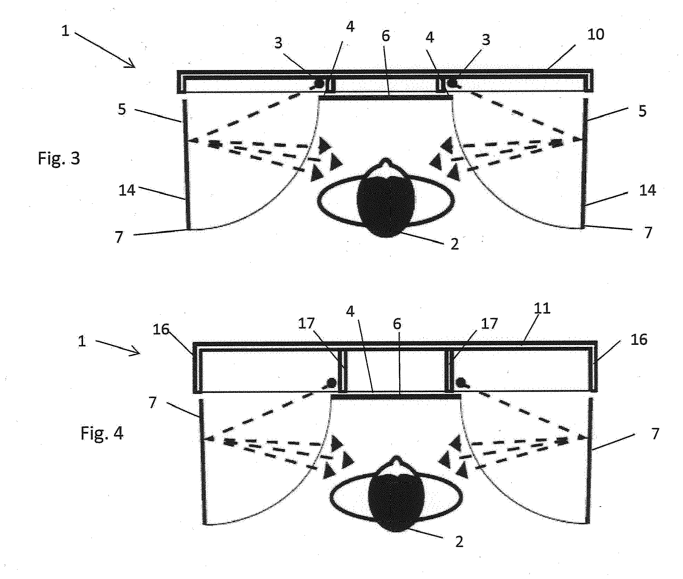

Figur 3 zeigt eine alternative Ausführungsform der Spiegelvorrichtung 1 gemäss Figur 2. Hierbei weist die Spiegelvorrichtung 1 zwei Lichtquellen 3 auf, die hinter einer gemeinsamen Abschirmung 4 angeordnet sind. Die Abschirmung 4 ist gleichzeitig die Betrachtungsfläche 6, in der sich die Person 2 im Spiegel betrachten kann. Die Lichtquellen 3 strahlen jeweils Licht auf einen Reflektor 5 eines Flügels 7 ab. Der Reflektor 5 reflektiert das Licht seitlich auf die Person 2. Gleichzeitig umfasst der Flügel 7 jeweils einen Rückseitenbetrachtungsbereich 14, in dem sich die Person 2 mit Hilfe der anderen vorhandenen Betrachtungsbereiche 6, 14 von hinten betrachten kann. Beide Flügel 7 sind drehbar befestigt und können geöffnet und geschlossen werden. Die Darstellung entspricht der geöffneten Position. Im geschlossenen Zustand fügen sich die Flügel 7 mit der Betrachtungsfläche 6 zu einer gemeinsame Spiegelfläche zusammen. Die Flügel 7 weisen hierzu auf der Rückseite eine Spiegelfläche auf. Die Rückseite entspricht der Diffusoroberfläche 8 gegenüberliegenden Seite des Flügels 7.

Figur 4 zeigt eine analog zu Figur 3 angepasste Version des Spiegelschrankes aus Figur 1. Hierbei sind zwei Leuchtenwände 17 und zwei Seitenwände 16 ausgebildet sowie ein Korpus 11. Der Korpus 11 kann somit Gegenstände aufnehmen, beispielsweise auf Tablaren angeordnet werden können. Die Seitenwände 16 sind mit dem Flügel 7 drehbeweglich verbunden. Somit können beide Flügel 7 geöffnet und geschlossen werden.

In beiden Figuren 3 und 4 können die Flügel 7 derartig ausgestaltet sein, dass sie den Betrachtungsbereich 6 im geschlossenen Zustand überlappen. Hierzu würde jeder Flügel 7 jeweils um die Hälfte der Ausdehnung des Betrachtungsbereiches 6 verlängert werden, so dass die freien Enden der Flügel 7 im geschlossenen Zustand im Wesentlichen aneinander anstossen und den Betrachtungsbereich 6 verdecken.

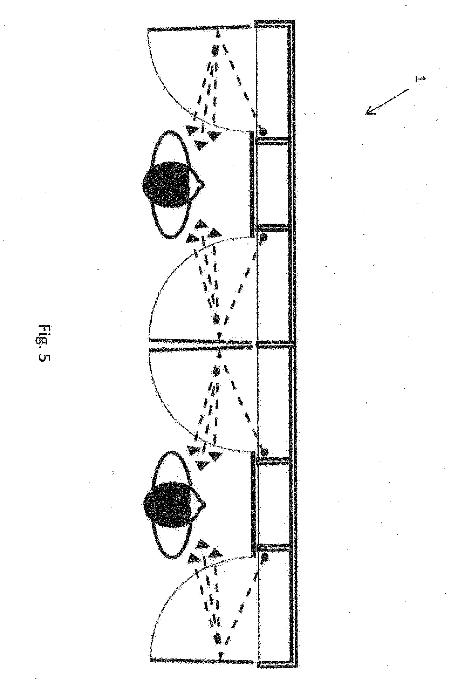

Figur 5 zeigt eine Kombination von zwei Spiegelvorrichtungen 1 gemäss Figur 4. Somit können zwei Personen gleichzeitig ein optimal ausgeleuchtetes Spiegelbild von sich betrachten.

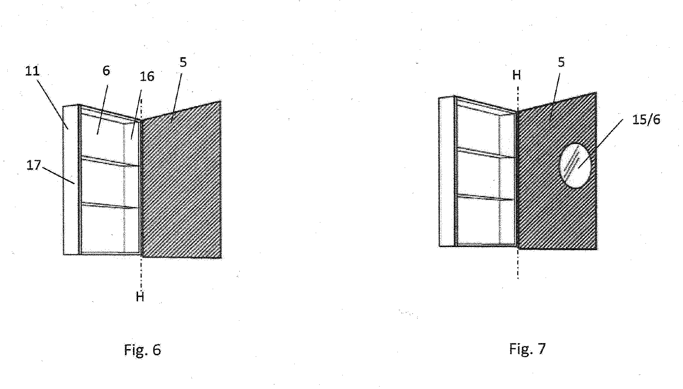

Figur 6 zeigt ein Spiegelschrankmodul gemäss der Erfindung mit einem Reflektor 5, der drehbeweglich um Höhenachse H an einem Korpus 11 befestigt ist. Der Korpus 11 umfasst eine Seitenwand 16 und eine Leuchtenwand 17. Der Leuchtenwand 17 umfasst Lichtquelle 3 (nicht sichtbar) in eine Nut. Die Nut der Leuchtenwand 17 ist gleichzeitig die Abschirmung 4 (nicht sichtbar). Der Betrachtungsbereich 6 ist gleichzeitig die Rückwand des Korpus 11. Alternativ hierzu kann die Rückseite eines weiteren Reflektors 5, der neben den Spiegelmodul angeordnet ist, als Betrachtungsbereich 6 verwendet werden. Die Rückseite des Reflektors 5 ist ebenfalls eine Spiegelfläche.

Figur 7 zeigt das Modul aus Figur 6, wobei die Reflektorfläche 5 zusätzlich einen Vergrösserungsspiegel 15 aufweist. Alternativ kann der Vergrösserungsspiegel 15 auch nur ein normaler Betrachtungsbereich 6 sein.

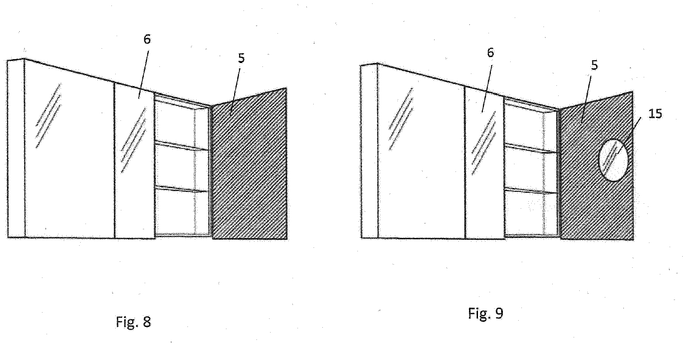

Figur 8 zeigt eine Spiegelvorrichtung 1, die ein Spiegelmodul gemäss Figur 6 umfasst. Die Spiegelvorrichtung umfasst insgesamt 2 Flügel, wobei die beiden Flügel je eine Reflektorfläche 5 umfassen. Die mittlere Spiegelfläche ist ein Betrachtungsbereich 6. Die Darstellung gemäss Figur 8 entspricht weiterhin den Schnitt aus Figur 4, wobei der Reflektor 5 keine Rückseiten Betrachtungsbereiche umfasst.

Figur 9 entspricht der Spiegelvorrichtung 1 aus Figur 8 wobei der Reflektor 5 zusätzlich einen Vergrösserungsspiegel 15 umfasst.

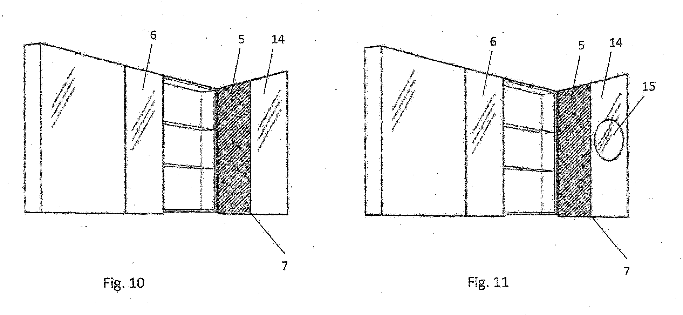

Figur 10 entspricht der Schnittdarstellung aus Figur 4, wobei die Spiegelvorrichtung 1 zwei Flügel und einen Betrachtungsbereich 6 umfasst. Die Flügel weisen jeweils einen Reflektor 5 und Rückseitenbetrachtungsbereich 14 auf. Der mittlere Bereich ist ein Betrachtungsbereich 6, vor dem sich die Person 2 (nicht dargestellt) bei Öffnung beider Flügel 7 beidseitig seitlich ausgeleuchtet betrachten kann.

Figur 11 entspricht der Ausführungsform aus Figur 10, wobei die Spiegelvorrichtung 1 gemäss Figur 11 zusätzlich einen Vergrösserungsspiegel 15 auf dem Rückseitenbetrachtungsbereich 14 umfasst. Der Vergrösserungsspiegel 15 ist auf der Fläche der Rückseiten Betrachtungsbereiches 14 aufgeklebt.

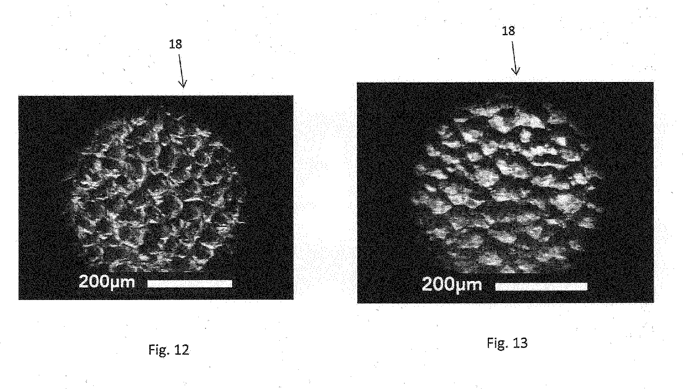

Figur 12 zeigt eine mikroskopische Aufnahme einer Diffusoroberfläche 8. Die Diffusoroberfläche 8 wurde mit einem liquiden oder pastösen Ätzmittel behandelt, so dass Kavitäten entstehen. Die Kavitäten weisen unterschiedliche Formen und unterschiedliche Tiefen sowie unterschiedliche Ausdehnungen auf. Die grösste Ausdehnung der einzelnen Kavitäten ist kleiner als 100 um. Die Tiefe der Kavitäten liegt im Bereich von kleiner als 30 um. Durch eine derartige Oberfläche wird das Licht optimal gestreut und es entstehen keine Schatten.

Figur 13 entspricht eine Diffusoroberfläche 8 gemäss Figur 12 in einer zweiten Aufnahme.

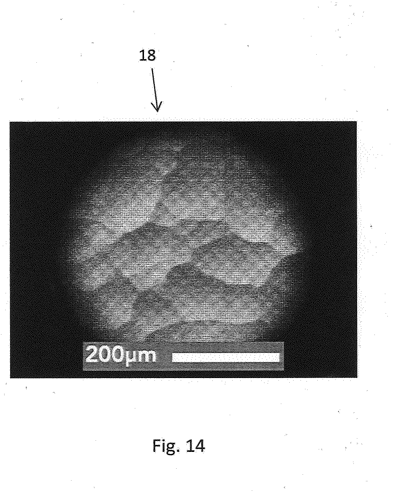

Figur 14 entspricht eine mikroskopische Aufnahme einer Diffusoroberfläche 8, wobei in diesem Fall die Oberfläche mit einem geschäumten Ätzmittel behandelt worden ist. Durch den Schaum entstehen grössere Ausdehnungen der Kavitäten sowie eine weichere Oberfläche durch weniger kantige Kavitäten. Weiterhin sind die durch Schaumätzung entstehenden Kavitäten etwas flacher ausgebildet als die mit liquiden Ätzmittel geätzten Kavitäten. Für die Ätzungen ist es weiterhin denkbar Ätzpaste oder Ätzcreme zu verwenden. Als Ätzmittel kann beispielsweise Ammoniumhydrogendifluorid und/oder Flusssäure verwendet werden.

## Patentansprüche

1. Spiegelvorrichtung (1) zur Betrachtung einer Person (2) in einem Spiegel, umfassend eine Lichtquelle (3), eine Abschirmung (4) zur Abschirmung von direktem Licht zwischen Person (2) und Lichtquelle (3), einen Reflektor (5) zur Reflexion des durch die Lichtquelle (3) erzeugten Lichtes und mindestens einen Betrachtungsbereich (6) in dem sich die Person (2) betrachten kann, wobei die Abschirmung (4) derartig zwischen Person und Lichtquelle angeordnet ist, dass kein direktes Licht zur Person (2) gelangt und der Reflektor (5) entweder im Wesentlichen in einer Ebene mit dem Betrachtungsbereich (6) angeordnet ist und so einen Flügel bildet und/oder der Betrachtungsbereich (6) Teil der Abschirmung (4) ist, so dass der Reflektor (5) beim Betrachten des Betrachtungsbereiches (6) durch die Person (2) jeweils seitlich anordenbar ist, **dadurch gekennzeichnet, dass** der Reflektor (5) eine Diffusoroberfläche (8) aufweist, die die eintreffende Strahlung der Lichtquelle (3) streut.

2. Spiegelvorrichtung (1) nach Anspruch 1, **dadurch gekennzeichnet, dass** die Diffusoroberfläche (8) Kavitäten, insbesondere konkave Strukturen, aufweist, die bevorzugt uneinheitlich, insbesondere bevorzugt zufällig verteilt ausgebildet sind.

3. Spiegelvorrichtung (1) nach einem der vorhergehenden Ansprüche, **dadurch gekennzeichnet, dass** der Reflektor (5) plan ausgebildet ist und bevorzugt eine Reflektionsschicht (9) aufweist, die insbesondere einen Abstand zur Diffusoroberfläche (8) aufweist, der kleiner als 1 cm, insbesondere kleiner als 0.8cm ist.

4. Spiegelvorrichtung (1) nach Anspruch 3, **dadurch gekennzeichnet, dass** die Längenausdehnung des Reflektors L_{R} mindestens einem Viertel des Abstandes A des Reflektors (5) von der Lichtquelle (3), bevorzugt mindestens einer Hälfte des Abstandes A des Reflektors (5) von der Lichtquelle (3), insbesondere bevorzugt im Wesentlichen der Hälfte des Abstandes A des Reflektors (5) von der Lichtquelle (3) entspricht.

5. Spiegelvorrichtung (1) nach einem der vorhergehenden Ansprüche, **dadurch gekennzeichnet, dass** der Reflektor (5), insbesondere der Flügel (7), beweglich, bevorzugt um eine Hochachse H drehbar, mit einer Rückwand (10) oder einem Korpus (11), insbesondere einer Seitenwand (16) des Korpus (11), der Spiegelvorrichtung (1) verbunden ist.

6. Spiegelvorrichtung (1) nach Anspruch 5, **dadurch gekennzeichnet, dass** an der Rückwand (10) und/oder am Korpus (11) eine oder mehrere Beleuchtungseinrichtungen (12) derart angeordnet sind, dass ein Raum indirekt beleuchtbar ist und bevorzugt im Wesentlichen kein direktes Licht auf eine Person vor der Spiegelvorrichtung (1) in einem montierten Zustand gelangt, wobei insbesondere die eine oder mehrere Beleuchtungseinrichtungen (12) in einer Nut versenkt sind.

7. Spiegelvorrichtung (1) nach Anspruch 5 oder 6, **dadurch gekennzeichnet, dass** durch ein Bewegen des Reflektors (5), insbesondere des Flügels (7), einen Schalter (13) betätigbar ist, so dass beim Öffnen der Spiegelvorrichtung (1) die Lichtquelle (3) einschaltet, bevorzugt mit einer Dimmschaltung, und beim Schliessen der Spiegelvorrichtung (1) die Lichtquelle ausschaltet, bevorzugt mit einer Dimmschaltung.

8. Spiegelvorrichtung (1) nach einem der vorhergehenden Ansprüche, **dadurch gekennzeichnet, dass** eine Rückseite des Reflektors (5), bevorzugt des Flügels (7), zumindest teilweise durch einen Spiegel gebildet wird.

9. Spiegelvorrichtung (1) nach einem der vorhergehenden Ansprüche, **dadurch gekennzeichnet, dass** zwei Lichtquellen (3), bevorzugt hinter einer gemeinsamen Abschirmung (4), die insbesondere bevorzugt ein Betrachtungsbereich (6) ist,
zwei Reflektoren (5) und bevorzugt zwei Rückseitenbetrachtungsbereiche (14), jeweils in einer Ebene mit einem Reflektor (5) aufweist.

10. Spiegelvorrichtung (1) nach einem der vorhergehenden Ansprüche, **dadurch gekennzeichnet, dass** der Reflektor (5) oder der Betrachtungsbereich (6) einen Vergrösserungsspiegel (15) umfasst.

11. Spiegelvorrichtung (1) nach einem der vorhergehenden Ansprüche, **dadurch gekennzeichnet, dass** die Spiegelvorrichtung (1) einen Korpus (11) umfasst, der zumindest eine Seitenwand (16) aufweist, an der ein Reflektor (5) angeordnet oder befestigt ist und eine gegenüberliegende Leuchtenwand (17) aufweist, in der die Lichtquelle (3) angeordnet ist.

12. Spiegelvorrichtung nach Anspruch 11, **dadurch gekennzeichnet, dass** zwei oder mehr Seitenwände (16) und zwei oder mehr Leuchtenwände (17) ausgebildet sind, wobei die Anzahl der Seitenwände (16) der Anzahl der Leuchtenwände (17) entspricht.

13. Verfahren zur Herstellung einer Spiegelvorrichtung (1) gemäss einem der vorhergehenden Ansprüche umfassend die Schritte
- Anordnen einer Lichtquelle (3) hinter einer Abschirmung (4),
- Anordnen eines Reflektors (5) in einem Abstand A zu der Lichtquelle, wobei der Abstand A grösser ist als die Längenausdehnung L_{R} des Reflektors, und derartig, dass Licht von der Lichtquelle (3) auf den Reflektor (5) trifft,
- Anordnen eines Betrachtungsbereiches (6) für eine Person in einer Ebene mit dem Reflektor (5) oder als Abschirmung (4) für die Lichtquelle (3), wobei der Reflektor eine Diffusoroberfläche (8) aufweist, die die eintreffende Strahlung der Lichtquelle (3) streut.

14. Verfahren zum Betrachten einer Person in einer Spiegelvorrichtung (1) gemäss einem der Ansprüche 1 bis 12, umfassend die Schritte
- Erzeugen von Licht durch eine Lichtquelle (3)
- Reflektieren des Lichtes durch einen Reflektor (5) von der Lichtquelle (3) auf eine Person (2), wobei der Reflektor (5) das Licht reflektiert und streut, insbesondere durch Lichtbrechung an einer Diffusoroberfläche (8).

15. Verwendung eines Reflektors (5) mit Diffusoroberfläche (8) zur Ausleuchtung von Personen vor einem Spiegel oder zum Fotografieren von Personen.
